# EUROPÄISCHE PATENTSCHRIFT

(11) **EP 3 157 777 B1**
(45) Veröffentlichungstag und Bekanntmachung des Hinweises auf die Patenterteilung: **14.03.2018**
(21) Anmeldenummer: 15729079.2
(22) Anmeldetag: 09.06.2015
(51) Int. Cl.: B60K 17/346, F16H 48/05, B60K 17/16

(54) **GETRIEBEEINRICHTUNG FÜR EIN KRAFTFAHRZEUG**
GEARBOX UNIT FOR A MOTOR VEHICLE
SYSTÈME DE TRANSMISSION POUR VÉHICULE AUTOMOBILE

(30) Priorität: 17.06.2014 DE 102014009556; 13.09.2014 DE 102014013574
(43) Veröffentlichungstag der Anmeldung: 26.04.2017
(73) Patentinhaber: Audi AG, 85045 Ingolstadt (DE)
(72) Erfinder: MEIXNER, Christian, 85049 Ingolstadt (DE)
(74) Vertreter: Lehle, Josef
(86) Internationale Anmeldenummer: PCT/EP2015/001152
(87) Internationale Veröffentlichungsnummer: WO 2015/192947

(56) Entgegenhaltungen:
- WO-A1-91/06787
- DE-A1-102012 021 513
- JP-A- S62 227 821

## Beschreibung

Die Erfindung betrifft eine Getriebeeinrichtung für ein Kraftfahrzeug mit den Merkmalen des Oberbegriffs des Anspruchs 1.

Eine derartige Getriebeeinrichtung dient beispielsweise dem Übertragen eines Drehmoments zwischen einem Antriebsaggregat des Kraftfahrzeugs und den wenigstens zwei Radachsen des Kraftfahrzeugs. Somit sind sowohl die erste Radachse als auch die zweite Radachse über die Getriebeeinrichtung an das Antriebsaggregat angebunden. Sie sind mithin angetriebene Radachsen, sodass das Kraftfahrzeug als allradangetriebenes Kraftfahrzeug vorliegen kann. Die erste Radachse ist dabei beispielsweise eine Vorderachse des Kraftfahrzeugs, während die zweite Radachse die Hinterachse des Kraftfahrzeugs darstellt. Es kann jedoch auch eine umgekehrte Konfiguration vorliegen.

Bei Getriebeeinrichtungen der genannten Art kann beispielsweise eine Verbindungswelle vorgesehen sein, um das Drehmoment zu der zweiten Radachse zu übertragen, wobei die Verbindungswelle insbesondere als Kardanwelle ausgebildet ist. Um gute Fahreigenschaften zu erzielen, muss der zweiten Radachse üblicherweise ein Differential zugeordnet sein, welches an die Verbindungswelle angeschlossen ist und für eine Aufteilung des über die Getriebeeinrichtung bereitgestellten Drehmoments an die erste Teilachse und die zweite Teilachse Sorge trägt. Das Differential ist mithin in der Wirkverbindung zwischen der Verbindungswelle und der zweiten Radachse vorgesehen. Das Differential ist jedoch platzaufwendig.

Die Druckschrift DE 10 2012 021 513 A1 zeigt eine Getriebeeinrichtung eines Kraftfahrzeugs, wobei das Kraftfahrzeug eine erste Radachse und eine zweite Radachse aufweist, wobei die zweite Radachse aus zumindest einer ersten Teilachse und einer zweiten Teilachse besteht. Die Getriebeeinrichtung zeichnet sich aus durch eine mit der ersten Teilachse wirkverbindbare erste Verbindungswelle, durch eine mit der zweiten Teilachse wirkverbindbare zweite Verbindungswelle sowie durch ein Koppelgetriebe mit einer mit einem Antriebsaggregat des Kraftfahrzeugs wirkverbindbaren Antriebswelle und mit einer mit der ersten Radachse wirkverbindbaren Abtriebswelle, wobei über das Koppelgetriebe die Antriebswelle mit der Abtriebswelle sowie mit der ersten und der zweiten Verbindungswelle drehmomentaufteilend wirkverbunden ist.

Es ist Aufgabe der Erfindung, eine Getriebeeinrichtung vorzustellen, welche gegenüber bekannten Getriebeeinrichtungen Vorteile aufweist, insbesondere eine kompakte Ausgestaltung der zweiten Radachse ermöglicht, wobei vorzugsweise kein Differential, insbesondere kein Achsdifferential, zwischen der Verbindungswelle und der zweiten Radachse vorliegt.

Dies wird erfindungsgemäß mit einer Getriebeeinrichtung mit den Merkmalen des Anspruchs 1 erreicht. Dabei sind eine mit der ersten Teilachse wirkverbindbare erste Verbindungswelle, eine mit der zweiten Teilachse wirkverbindbare zweite Verbindungswelle sowie ein Koppelgetriebe mit einer mit einem Antriebsaggregat des Kraftfahrzeugs wirkverbindbaren Antriebswelle und mit einer mit der ersten Radachse wirkverbindbaren Abtriebswelle vorgesehen, wobei über das Koppelgetriebe die Antriebswelle mit der ersten und der zweiten Verbindungswelle drehmomentaufteilend wirkverbunden ist. Gemäß der Erfindung ist vorgesehen, dass die erste Verbindungswelle und die zweite Verbindungswelle jeweils direkt an das Koppelgetriebe angeschlossen sind, und dass die Abtriebswelle mittels einer ersten Kupplung schaltbar mit der ersten Verbindungswelle und mittels einer zweiten Kupplung schaltbar mit der zweiten Verbindungswelle wirkverbindbar ist, wobei zwischen der ersten Kupplung und der ersten Verbindungswelle ein erstes Überlagerungsgetriebe und zwischen der zweiten Kupplung und der zweiten Verbindungswelle ein zweites Überlagerungsgetriebe vorgesehen ist, und wobei das erste Überlagerungsgetriebe und das zweite Überlagerungsgetriebe als unmittelbar mit dem Koppelgetriebe wirkverbundene Planetengetriebe ausgebildet sind.

Eine Drehmomentübertragung von der Getriebeeinrichtung in Richtung der zweiten Radachse wird also nicht wie üblich mittels lediglich einer Verbindungswelle beziehungsweise Kardanwelle, sondern vielmehr mit wenigstens zwei Verbindungswellen, nämlich insbesondere der ersten und der zweiten Verbindungswelle, vorgenommen. Die erste Verbindungswelle ist dabei mit der ersten Teilachse der zweiten Radachse koppelbar beziehungsweise gekoppelt. Die zweite Verbindungswelle ist dagegen mit der zweiten Teilachse der zweiten Radachse koppelbar beziehungsweise gekoppelt. Weil die Drehmomentübertragung zu den beiden Teilachsen getrennt voneinander über die beiden Verbindungswellen erfolgt, kann ein ansonsten notwendiges Achsdifferential, welches der zweiten Radachse zugeordnet wäre, in das Koppelgetriebe integriert werden. Beispielsweise weist das Koppelgetriebe lediglich das Achsendifferential auf. Das Koppelgetriebe kann jedoch auch als Doppeldifferential vorliegen, welches sowohl ein Mittendifferential als auch das Achsdifferential in einer Baueinheit integriert. Entsprechend ist eine platzsparende Anordnung der zweiten Radachse möglich.

Die Erfindung betrifft selbstverständlich auch ein Kraftfahrzeug mit einer Getriebeeinrichtung, welche bevorzugt auf die vorstehend genannte Art ausgebildet ist. Das Kraftfahrzeug weist die erste Radachse und die zweite Radachse auf, wobei die zweite Radachse aus zumindest der ersten Teilachse und der zweiten Teilachse besteht. Das Kraftfahrzeug zeichnet sich durch eine mit der ersten Teilachse wirkverbundene erste Verbindungswelle, durch eine mit der zweiten Teilachse wirkverbundenen zweite Verbindungswelle sowie durch ein Koppelgetriebe mit einer mit einem Antriebsaggregat des Kraftfahrzeug wirkverbundenen Antriebswelle und mit einer mit der ersten Radachse wirkverbundenen Abtriebswelle aus, wobei über das Koppelgetriebe die Antriebswelle mit der ersten und der zweiten Verbindungswelle drehmomentaufteilend wirkverbunden ist, und wobei die Abtriebswelle mittels einer ersten Kupplung schaltbar mit der ersten Verbindungswelle und mittels einer zweiten Kupplung schaltbar mit der zweiten Verbindungswelle wirkverbindbar ist, wobei zwischen der ersten Kupplung und der ersten Verbindungswelle ein erstes Überlagerungsgetriebe und zwischen der zweiten Kupplung und der zweiten Verbindungswelle ein zweites Überlagerungsgetriebe vorgesehen ist. Das Kraftfahrzeug beziehungsweise die Getriebeeinrichtung des Kraftfahrzeugs kann gemäß der vorliegenden Beschreibung weitergebildet sein.

Die Wirkverbindung über das Koppelgetriebe ist drehmomentaufteilend. Das bedeutet, dass ein Teil des über die Antriebswelle bereitgestellten Drehmoments an der ersten Verbindungswelle und ein weiterer Teil an der zweiten Verbindungswelle bereitgestellt wird. Dabei kann eine gleiche, aber auch eine ungleiche Drehmomentverteilung zwischen der ersten Verbindungswelle und der zweiten Verbindungswelle erzielt werden. Sowohl die erste Verbindungswelle als auch die zweite Verbindungswelle ist bevorzugt als Kardanwelle ausgebildet.

Zusätzlich zu dem Koppelgetriebe sind das erste Überlagerungsgetriebe und das zweite Überlagerungsgetriebe vorgesehen. Über die Überlagerungsgetriebe ist eine Wirkverbindung zwischen der Abtriebswelle und der entsprechenden Verbindungswelle herstellbar. Zu diesem Zweck sind die erste Kupplung und die zweite Kupplung vorgesehen. Während also die Antriebswelle über das Koppelgetriebe mit der ersten Verbindungswelle und der zweiten Verbindungswelle wirkverbunden ist, vorzugsweise starr und/oder permanent, ist die Abtriebswelle mittels der ersten Kupplung an die erste Verbindungswelle und mittels der zweiten Kupplung an die zweite Verbindungswelle koppelbar. In der Koppelverbindung zwischen der ersten Verbindungswelle und der Abtriebswelle ist dabei das erste Überlagerungsgetriebe und in der Koppelverbindung zwischen der zweiten Verbindungswelle und der Abtriebswelle das zweite Überlagerungsgetriebe angeordnet.

Das bedeutet also, dass Drehmoment von der ersten Verbindungswelle über die erste Kupplung und das erste Überlagerungsgetriebe sowie Drehmoment von der zweiten Verbindungswelle über die zweite Kupplung und das zweite Überlagerungsgetriebe jeweils wahlweise zu der Abtriebswelle übertragen werden kann.

Beispielsweise ist in einem ersten Schaltzustand der ersten Kupplung die Abtriebswelle von der ersten Verbindungswelle entkoppelt, dies gilt ebenso für die zweite Verbindungswelle in einem ersten Schaltzustand der zweiten Kupplung. In einem zweiten Schaltzustand der ersten Kupplung ist die Abtriebswelle über das erste Überlagerungsgetriebe mit der ersten Verbindungswelle wirkverbunden; analog dazu die zweite Verbindungswelle in einem zweiten Schaltzustand der zweiten Kupplung. Die Überlagerungsgetriebe weisen dabei eine bestimmte Übersetzung auf, welche beispielsweise fest ist. Beispielweise ist die Übersetzung des ersten Überlagerungsgetriebes identisch mit derjenigen des zweiten Überlagerungsgetriebes. Vorzugsweise sind die Übersetzungen jedoch voneinander verschieden. Selbstverständlich können das erste Überlagerungsgetriebe und/oder das zweite Überlagerungsgetriebe jedoch alternativ auch als Schaltgetriebe ausgeführt sein und in soweit eine einstellbare Übersetzung aufweisen.

Es soll darauf hingewiesen werden, dass die beiden Überlagerungsgetriebe von dem Koppelgetriebe verschieden sind. Die über die Überlagerungsgetriebe zwischen der jeweiligen Verbindungswelle und der Abtriebswelle hergestellte Wirkverbindung liegt insoweit nicht oder zumindest nicht vollständig über das Koppelgetriebe vor. Mit Hilfe der Überlagerungsgetriebe ist es insbesondere bei einer Kurvenfahrt des Kraftfahrzeugs möglich, ein Drehmoment von der ersten Teilachse und/oder der zweiten Teilachse der zweiten Radachse an die erste Radachse zu übertragen. Das bedeutet insbesondere, dass sowohl von einem kurvenäußeren Hinterrad als auch von einem kurveninneren Hinterrad Drehmoment an die Vorderachse übertragen werden kann, wobei dem kurvenäußeren Hinterrad vorzugsweise ein geringeres Drehmoment entzogen wird als dem kurveninneren Hinterrad. Insgesamt ist also mit Hilfe der Überlagerungsgetriebe in zahlreichen Fahrzuständen des Kraftfahrzeugs, vorzugsweise in jedem Fahrzustand des Kraftfahrzeugs, ein "Torque Vectoring" möglich, also das gezielte Übertragen von Drehmoment auf eine bestimmte Radachse, insbesondere von einer oder beiden Teilachsen der zweiten Radachse. Jedes der Überlagerungsgetriebe kann beispielsweise als Minusplanetengetriebe oder als Plusplanentengetriebe realisiert sein.

Beispielsweise ist es vorgesehen, dass das Koppelgetriebe ein Planetengetriebe aufweist, wobei die Antriebswelle sowie die erste Verbindungswelle und die zweite Verbindungswelle unmittelbar mit dem Koppelgetriebe wirkverbunden sind. Das Koppelgetriebe stellt nunmehr ein Achsdifferential für die zweite Radachse dar. Dieses wird also von einem Einbauort im Bereich der zweiten Radachse in die Getriebeeinrichtung integriert, welche beispielsweise ein Mittendifferential des Kraftfahrzeugs ersetzt. Die Antriebswelle sowie die beiden Verbindungswellen sind unmittelbar mit dem Koppelgetriebe wirkverbunden. Unter der unmittelbaren Wirkverbindung ist zu verstehen, dass die genannten Wellen jeweils mit einem Element des Koppelgetriebes gekoppelt sind, sodass die Wirkverbindung nicht über eines der Überlagerungsgetriebe verläuft.

Weiterhin ist vorgesehen, dass das erste Überlagerungsgetriebe und das zweite Überlagerungsgetriebe als Planetengetriebe ausgebildet sind, die unmittelbar mit dem Koppelgetriebe wirkverbunden sind. Jeweils ein Rad der beiden Überlagerungsgetriebe ist mithin an ein Rad des Koppelgetriebes angeschlossen beziehungsweise mit diesem wirkverbunden insbesondere starr und/oder permanent. Beispielsweise liegt eine Wirkverbindung zwischen dem Koppelgetriebe und der ersten Verbindungswelle einerseits sowie dem Koppelgetriebe und der zweiten Verbindungswelle andererseits zunächst unmittelbar vor. Das bedeutet, dass die entsprechende Verbindungswelle jeweils direkt an das Koppelgetriebe angeschlossen ist, also vorzugsweise starr und/oder permanent mit einem Rad des Koppelgetriebes wirkverbunden ist. Zusätzlich oder alternativ kann es vorgesehen sein, dass die vorstehend genannten Wirkverbindungen über das entsprechende Überlagerungsgetriebe vorliegen. Das bedeutet also, dass eine Wirkverbindung zwischen dem Koppelgetriebe und der ersten Verbindungswelle über das erste Überlagerungsgetriebe und/oder eine Wirkverbindung zwischen dem Koppelgetriebe und der zweiten Verbindungswelle über das zweite Überlagerungsgetriebe vorliegt.

Eine bevorzugte Ausführungsform der Erfindung sieht vor, dass die Abtriebswelle über die erste Kupplung mit dem ersten Übertragungsgetriebe und über die zweite Kupplung mit dem zweiten Überlagerungsgetriebe wirkverbindbar ist. Die Kupplungen sind insoweit auf der der Abtriebswelle zugeordneten Seite des Überlagerungsgetriebes vorgesehen. Bei vollständig geöffneter erster Kupplung beziehungsweise bei vollständig geöffneter zweiter Kupplung ist also das erste Überlagerungsgetriebe beziehungsweise das zweite Überlagerungsgetriebe vollständig von der Abtriebswelle entkoppelt. Gleichzeitig kann es jedoch vorgesehen sein, dass das erste Überlagerungsgetriebe vorzugsweise starr und/oder permanent mit der ersten Verbindungswelle und das zweite Überlagerungsgetriebe vorzugsweise starr und/oder permanent der zweiten Verbindungswelle wirkverbunden ist.

Eine weitere Ausgestaltung der Erfindung sieht vor, dass das Koppelgetriebe ein Koppelgetriebesonnenrad, ein Koppelgetriebehohlrad und einen Koppelgetriebeplanetenträger mit wenigstens einem mit dem Koppelgetriebesonnenrad und dem Koppelgetriebehohlrad kämmenden Koppelgetriebeplanetenrad aufweist, wobei das Koppelgetriebehohlrad mit der Antriebswelle unmittelbar wirkverbunden ist. Das Koppelgetriebe liegt insoweit als Planetengetriebe vor und weist die entsprechenden Elemente beziehungsweise Räder auf. Vorzugsweise ist die Antriebswelle starr und/oder permanent mit dem Koppelgetriebehohlrad verbunden. Selbstverständlich kann jedoch auch eine andere Ausgestaltung vorgesehen sein.

In einer weiteren bevorzugten Ausgestaltung der Erfindung ist vorgesehen, dass der Koppelgetriebeplanetenträger mit der ersten Verbindungswelle und das Koppelgetriebesonnenrad mit der zweiten Verbindungswelle unmittelbar wirkverbunden ist, oder dass der Koppelgetriebeplanetenträger mit der zweiten Verbindungswelle und das Koppelgetriebesonnenrad mit der ersten Verbindungswelle unmittelbar wirkverbunden ist. Es liegen insoweit zwei verschiedene Ausgestaltungsmöglichkeiten für die Getriebeeinrichtung vor. Der Koppelgetriebeplanetenträger kann entweder mit der ersten Verbindungswelle oder der zweiten Verbindungswelle und das Koppelgetriebesonnenrad mit der jeweils anderen Welle unmittelbar wirkverbunden sein, vorzugsweise starr und/oder permanent. Unter der unmittelbaren Wirkverbindung ist wiederum eine Wirkverbindung zu verstehen, welche vorzugsweise nicht über eines oder mehrere der Getriebe, also beispielsweise das Koppelgetriebe, das erste Überlagerungsgetriebe und/oder das zweite Überlagerungsgetriebe, verläuft.

Eine Weiterbildung der Erfindung sieht vor, dass der Koppelgetriebeplanetenträger zumindest ein Außenplanetenrad und zumindest ein Innenplanetenrad aufweist, die miteinander kämmen, wobei das Außenplanetenrad mit dem Koppelgetriebehohlrad und das Innenplanetenrad mit dem Koppelgetriebesonnenrad kämmt. Das Koppelgetriebe ist insoweit als Doppelplanetengetriebe ausgebildet. Entsprechend ist sowohl das Außenplanetenrad als auch das Innenplanetenrad vorgesehen, über welche das Koppelgetriebehohlrad und das Koppelgetriebesonnenrad in Wirkverbindung stehen. Sowohl das Außenplanetenrad als auch das Innenplanetenrad sind an dem Koppelgetriebeplanetenträger drehbar angeordnet beziehungsweise gelagert. Sie kämmen miteinander, während gleichzeitig das Außenplanetenrad in das Koppelgetriebehohlrad und das Innenplanetenrad in das Koppelgetriebesonnenrad eingreift. Das Außenplanetenrad und das Innenplanetenrad können an bezüglich der Drehachse des Koppelgetriebeplanetenträgers unterschiedlichen Radialpositionen angeordnet sein.

In einer weiteren Ausgestaltung der Erfindung ist vorgesehen, dass das erste Überlagerungsgetriebe ein erstes Primärgetriebe und ein erstes Sekundärgetriebe aufweist, wobei das erste Primärgetriebe ein erstes Primärgetriebesonnenrad und einen ersten Primärgetriebeplanetenträger mit wenigstens einem mit dem ersten Primärgetriebesonnenrad kämmenden ersten Primärgetriebeplanetenrad aufweist, wobei das erste Primärgetriebesonnenrad mit der ersten Verbindungswelle unmittelbar wirkverbunden ist und der erste Primärgetriebeplanetenträger mit dem Koppelgetriebeplanetenträger unmittelbar wirkverbunden ist. Das erste Überlagerungsgetriebe besteht insoweit aus zwei miteinander gekoppelten Planetengetrieben, nämlich dem ersten Primärgetriebe und dem ersten Sekundärgetriebe. Beide weisen jeweils ein Sonnenrad und einen Planetenträger auf, welche für das erste Primärgetriebe als erstes Primärgetriebesonnenrad und als erster Primärgetriebeplanetenträger und für das erste Sekundärgetriebe als erstes Sekundärgetriebesonnenrad und als erster Sekundärgetriebeplanetenträger bezeichnet werden können. Die erste Verbindungswelle ist unmittelbar an das erste Primärgetriebesonnenrad angeschlossen, insbesondere starr und/oder permanent mit diesem wirkverbunden. Analog dazu ist der Koppelgetriebeplanetenträger an den ersten Primärträgerplanetenträger angeschlossen, vorzugsweise mit diesem starr und/oder permanent wirkverbunden.

In einer weiteren Ausgestaltung der Erfindung ist vorgesehen, dass das erste Sekundärgetriebe ein erstes Sekundärgetriebesonnenrad und einen ersten Sekundärgetriebeplanetenträger mit wenigstens einem mit dem ersten Sekundärgetriebesonnenrad kämmenden ersten Sekundärgetriebeprimärplanetenrad aufweist, wobei das erste Sekundärgetriebesonnenrad mittels der ersten Kupplung bezüglich der Abtriebswelle zumindest teilweise, insbesondere vollständig, festsetzbar ist und der erste Sekundärgetriebeplanetenträger mit dem Koppelgetriebeplanetenträger unmittelbar wirkverbunden ist. Auf die Ausgestaltung des ersten Sekundärgetriebes wurde vorstehende bereits hingewiesen. Der erste Sekundärgetriebeplanetenträger ist analog zu dem ersten Primärgetriebeplanetenträger mit dem Koppelgetriebeplanetenträger verbunden, vorzugsweise mit diesem starr und/oder permanent wirkverbunden. Das bedeutet gleichzeitig, dass gemäß den vorstehenden Ausführungen der erste Primärgetriebeplanetenträger und der erste Sekundärgetriebeplanetenträger ebenfalls unmittelbar miteinander wirkverbunden sind. Vorzugsweise sind sie als gemeinsamer Planetenträger ausgeführt. In einer Weiterbildung dazu kann es vorgesehen sein, dass auch der Koppelgetriebeplanetenträger Bestanteil dieses gemeinsamen Planetenträgers ist, sodass insoweit vorzugsweise lediglich eine einzige gemeinsame Drehachse des Koppelgetriebeplanetenrads, des ersten Primärgetriebeplanetenrads sowie des ersten Sekundärgetriebeplanetenrads vorliegt.

Vorzugsweise sind das erstes Primärgetriebeplanetenrad und das erste Sekundärgetriebeplanetenrad drehfest miteinander verbunden und gemeinsam an dem ersten Primärgetriebeplanetenträger beziehungsweise dem ersten Sekundärgetriebeplanetenträger gelagert.

Zusätzlich oder alternativ kann vorgesehen sein, dass das zweite Überlagerungsgetriebe ein zweites Primärgetriebe und ein zweites Sekundärgetriebe aufweist, wobei das zweite Primärgetriebe ein zweites Primärgetriebesonnenrand und einen zweiten Primärgetriebeplanetenträger mit wenigstens einem mit dem zweiten Primärgetriebesonnenrad kämmenden zweiten Primärgetriebeplanetenrad aufweist, wobei das zweite Primärgetriebesonnenrad mit dem Koppelgetriebeplanetenträger unmittelbar wirkverbunden ist und der zweite Primärgetriebeplanetenträger mit der ersten Verbindungswelle unmittelbar wirkverbunden ist. Auch das zweite Überlagerungsgetriebe besteht insoweit aus zwei Planetengetrieben, nämlich dem zweiten Primärgetriebe und dem zweiten Sekundärgetriebe, welche miteinander wirkverbunden sind. Die Planetengetriebe weisen die üblichen Bestandteile auf. Hierzu wird auf die vorstehenden Ausführungen zu dem ersten Überlagerungsgetriebe verwiesen, die Ausführungen können analog herangezogen werden. Es ist nun vorzugsweise vorgesehen, dass der Koppelgetriebeplanetenträger mit dem zweiten Primärgetriebesonnenrad verbunden ist, insbesondere mit diesem starr und/oder permanent wirkverbunden ist. Zudem soll die erste Verbindungswelle an den zweiten Primärgetriebeplanetenträger angeschlossen sein, vorzugsweise starr und/oder permanent mit diesem wirkverbunden sein.

Schließlich kann vorgesehen sein, dass das zweite Sekundärgetriebe ein zweites Sekundärgetriebesonnenrad und einen zweiten Sekundärgetriebeplanetenträger mit wenigstens einem mit dem zweiten Sekundärgetriebesonnenrad kämmenden zweiten Sekundärgetriebeplanetenrad aufweist, wobei das zweite Sekundärgetriebesonnenrad mittels der zweiten Kuppelung bezüglich der Abtriebswelle zumindest teilweise, insbesondere vollständig festsetzbar ist und der zweite Sekundärgetriebeplanetenträger mit dem zweiten Primärgetriebeplanetenträger unmittelbar wirkverbunden ist. Der zweite Sekundärgetriebeplanetenträger ist also an den zweiten Primärgetriebeplanetenträger angeschlossen, vorzugsweise mit diesem starr und/oder permanent wirkverbunden. Das bedeutet gleichzeitig, dass er auch mit der ersten Verbindungswelle unmittelbar wirkverbunden ist. Die Abtriebswelle ist nun über die zweite Kupplung mit dem zweiten Sekundärgetriebesonnenrad wirkverbindbar. Bei geschlossener zweiter Kupplung ist mithin die Abtriebswelle bezüglich des zweiten Sekundärgetriebesonnenrads zumindest teilweise, insbesondere vollständig, festgesetzt.

Vorzugsweise sind das zweite Primärgetriebeplanetenrad und das zweite Sekundärgetriebeplanetenrad drehfest miteinander verbunden und gemeinsam an dem zweiten Primärgetriebeplanetenträger beziehungsweise dem zweiten Sekundärgetriebeplanetenträger gelagert.

Zusätzlich oder alternativ kann vorgesehen sein, dass die erste Verbindungswelle über eine erste Getriebeeinheit mit der ersten Teilachse und die zweite Verbindungswelle über eine, insbesondere identisch mit der ersten Getriebeeinheit ausgebildete zweite Getriebeeinheit mit der zweiten Teilachse verbindbar ist. Zwischen den Verbindungswellen und der jeweiligen Teilachse sind also die Getriebeeinheiten vorgesehen. Diese Getriebeeinheiten können beispielsweise eine Zahnradstufe, insbesondere eine Kegelradstufe, aufweisen. Dabei können für die erste Teilachse und die zweite Teilachse unterschiedliche Getriebeeinheiten vorgesehen sein. Besonders vorteilhaft ist es jedoch, wenn die zweite Getriebeeinheit der zweiten Teilachse identisch mit der ersten Getriebeeinheit der ersten Teilachse ausgestaltet ist, um insoweit eine geringere Anzahl unterschiedlicher Teile vorhalten zu müssen.

Zudem kann vorgesehen sein, dass die erste und die zweite Verbindungswelle koaxial oder parallel versetzt zueinander angeordnet sind. Ersteres ist insbesondere dann der Fall, wenn die erste Verbindungswelle mit dem Koppelgetriebesonnenrad und die zweite Verbindungswelle mit dem Koppelgetriebeplanetenträger jeweils unmittelbar wirkverbunden ist, also beispielsweise ohne eine zwischengelagerte Zahnradstufe. Die koaxiale Anordnung der beiden Verbindungswellen ermöglicht eine äußerst platzsparende Ausgestaltung der Getriebeeinrichtung. Die parallel zueinander versetzte Anordnung ist insbesondere vorgesehen, wenn zum Beispiel die Wirkverbindung der ersten Verbindungswelle über eine Zahnradstufe oder eine drehrichtungserhaltende Kopplung verläuft.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Getriebeeinrichtung für ein Kraftfahrzeug in einer ersten Ausführungsform,
- Figur 2: die Getriebeeinrichtung in einer zweiten Ausführungsform, und
- Figur 3: die Getriebeeinrichtung in einer dritten Ausführungsform.

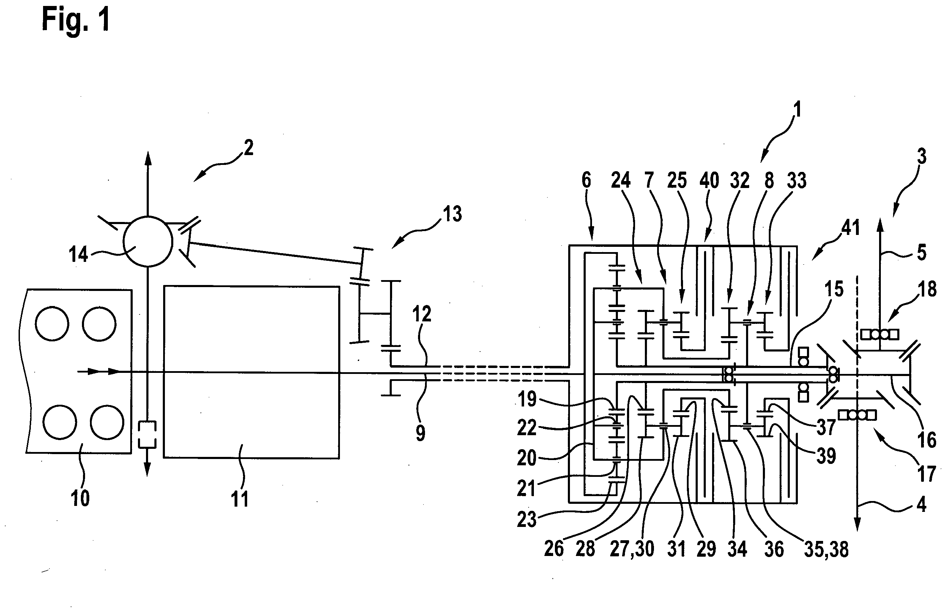

Die Figur 1 zeigt eine erste Ausführungsform einer Getriebeeinrichtung 1 für ein Kraftfahrzeug, welches hier lediglich schematisch angedeutet ist. Das Kraftfahrzeug weist eine erste Radachse 2 und eine zweite Radachse 3 auf, die hier wiederum lediglich angedeutet sind, wobei die zweite Radachse 3 aus zumindest einer ersten Teilachse 4 und einer zweiten Teilachse 5 besteht. Die Getriebeeinrichtung 1, die erste Radachse 2 und die zweite Radachse 3 bilden insoweit zumindest einen Teil eines Antriebsstrangs des Kraftfahrzeugs. Die Getriebeeinrichtung 1 verfügt über ein Koppelgetriebe 6, ein erstes Überlagerungsgetriebe 7 und ein zweites Überlagerungsgetriebe 8. Das Koppelgetriebe 1 weist eine Antriebswelle 9 auf, die mit einem Antriebsaggregat 10 des Kraftfahrzeugs wirkverbindbar ist, beispielsweise über ein Schaltgetriebe 11.

Weiterhin verfügt das Koppelgetriebe 6 über eine Abtriebswelle 12, an welche die erste Radachse 2 angeschlossen ist, beispielsweise über wenigstens eine Zahnradstufe 13 und/oder ein Achsdifferential 14. Eine Wirkverbindung von dem Koppelgetriebe 6 zu der zweiten Radachse 3 beziehungsweise der dieser zugeordneten ersten Teilachse 4 und der zweiten Teilachse 5 liegt über eine erste Verbindungswelle 15 und eine zweite Verbindungswelle 16 vor. Die erste Verbindungswelle 15 ist über eine erste Getriebeeinheit 17, die beispielsweise als Zahnradstufe vorliegt, mit der ersten Teilachse 4 und die zweite Verbindungswelle 16 über eine zweite Getriebeeinheit 18, die beispielsweise ebenfalls als Zahnstufe vorliegt, mit der zweiten Teilachse 5 wirkverbunden.

Das Koppelgetriebe 6 ist als Planetengetriebe ausgebildet und weist ein Koppelgetriebesonnenrad 19 und einen Koppelgetriebeplanetenträger 20 auf. An dem Koppelgetriebeplanetenträger 20 sind wenigstens ein Außenplanetenrad 21 und ein Innenplanetenrad 22 drehbar gelagert. Das Innenplanetenrad 22 kämmt nun mit dem Koppelgetriebesonnenrad 19 sowie mit dem Außenplanetenrad 21. Das Außenplanetenrad 21 dagegen kämmt mit dem Innenplanetenrad 22 sowie einem Koppelgetriebehohlrad 23, welches ebenfalls dem Koppelgetriebe 6 zugeordnet ist. In dem hier dargestellten Ausführungsbeispiel ist die Antriebswelle 9 starr und/oder permanent mit dem Koppelgetriebehohlrad 23 wirkverbunden. Der Koppelgetriebeplanetenträger 20 ist dagegen vorzugsweise starr und/oder permanent mit der zweiten Verbindungswelle 16 wirkverbunden. Die erste Verbindungswelle 15 ist vorzugsweise starr und/oder permanent mit dem Koppelgetriebesonnenrad 19 wirkverbunden.

Das erste Überlagerungsgetriebe 7 besteht aus zwei Planetengetrieben, nämlich einem ersten Primärgetriebe 24 und einem ersten Sekundärgetriebe 25. Das erste Primärgetriebe 24 verfügt über ein erstes Primärgetriebesonnenrad 26 und einen ersten Primärgetriebeplanetenträger 27. An diesem ist wenigstens ein erstes Primärgetriebeplanetenrad 28 drehbar gelagert, welches zugleich mit dem ersten Primärgetriebesonnenrad 26 kämmt. Das erste Sekundärgetriebe 25 weist ein erstes Sekundärgetriebesonnenrad 29 und einen ersten Sekundärgetriebeplanetenträger 30 auf, an welchem ein erstes Sekundärgetriebeplanetenrad 31 drehbar gelagert ist. Besonders bevorzugt sind der erste Primargetriebeplanetenträger 27 und der erste Sekundärgetriebeplanetenträger 30 als gemeinsamer Planetenträger ausgeführt. Weiterhin sind vorzugsweise das erstes Primärgetriebeplanetenrad 28 und das erste Sekundärgetriebeplanetenrad 31 drehfest miteinander verbunden und insbesondere gemeinsam in dem ersten Primärgetriebeplanetenträger 27 beziehungsweise dem ersten Sekundärgetriebeplanetenträger 30 drehbar gelagert.

Der erste Primärgetriebeplanetenträger 27 und der erste Sekundärgetriebeplanetenträger 30 sind mit dem Koppelgetriebeplanetenträger 20 wirkverbunden, insbesondere starr und/oder permanent. Das erste Primärgetriebeplanetenrad 28 und das erste Sekundärgetriebeplanetenrad 31 können dieselbe Drehachse wie das Innenplanetenrad 22 aufweisen. Beispielsweise liegt zwischen dem Koppelgetriebesonnenrad 19 und dem Innenplanetenrad 22 dasselbe Übersetzungsverhältnis vor wie zwischen dem ersten Primärgetriebesonnenrad 26 und dem ersten Primärgetriebeplanetenrad 28. Bevorzugt sind die Übersetzungsverhältnisse jedoch voneinander verschieden. Das Übersetzungsverhältnis zwischen dem ersten Sekundärgetriebesonnenrad 29 und dem ersten Sekundärgetriebeplanetenrad 31 kann von diesem Übersetzungsverhältnis beziehungsweise diesen Übersetzungsverhältnissen verschieden sein.

Das zweite Überlagerungsgetriebe 8 weist ebenfalls zwei Planetengetriebe, nämlich das zweite Primärgetriebe 32 und das zweite Sekundärgetriebe 33, auf. Das zweite Primärgetriebe verfügt über das zweite Primärgetriebesonnenrad 34 und den zweiten Primärgetriebeplanetenträger 35, an welchem wenigstens ein zweites Primärgetriebeplanetenrad 36 drehbar gelagert ist. Das zweite Sekundärgetriebe 33 verfügt über ein zweites Sekundärgetriebesonnenrad 37 und einen zweiten Sekundärgetriebeplanetenträger 38. An diesem ist wenigstens ein zweites Sekundärgetriebeplanetenrad 39 drehbar gelagert. Insbesondere sind wiederum der zweite Primärgetriebeplanetenträger 35 und der zweite Sekundärgetriebeplanetenträger 38 als gemeinsamer Planetenträger ausgeführt. An letzterem sind das zweite Primärgetriebeplanetenrad 36 und das zweite Sekundärgetriebeplanetenrad 39 drehbar gelagert. Bevorzugt sind das zweite Primärgetriebeplanetenrad 36 und das zweite Sekundärgetriebeplanetenrad 39 drehfest miteinander verbunden.

Das zweite Primärgetriebesonnenrad 34 ist mit dem ersten Primärgetriebeplanetenträger 27 und/oder dem ersten Sekundärgetriebeplanetenträger 30 wirkverbunden, insbesondere starr und/oder permanent. Der zweite Primärgetriebeplanetenträger 35 und der zweite Sekundärgetriebeplanetenträger 38 sind ebenfalls miteinander wirkverbunden, vorzugsweise sind sie als gemeinsamer Planetenträger ausgebildet. Das zweite Primärgetriebeplanetenrad 36 kämmt mit dem zweiten Primärgetriebesonnenrad 34. Analog dazu kämmt das zweite Sekundärgetriebeplanetenrad 39 mit dem zweiten Sekundärgetriebesonnenrad 37. Der zweite Primärgetriebeplanetenträger 35 und/oder der zweite Sekundärgetriebeplanetenträger 38 sind mit der ersten Verbindungswelle wirkverbunden, insbesondere starr und/oder permanent.

Die Getriebeeinrichtung 1 verfügt weiterhin über eine erste Kupplung 40 und eine zweite Kupplung 41. Mithilfe der ersten Kupplung 40 ist die Abtriebswelle 12 mit dem ersten Sekundärgetriebesonnenrad 29 wirkverbindbar. Bei geschlossener Kopplung ist also die zweite Abtriebswelle 12 bezüglich des ersten Sekundärgetriebesonnenrads 29 festgesetzt. Analog dazu dient die zweite Kupplung 41 dem Herstellen einer Wirkverbindung zwischen der Abtriebswelle 12 und dem zweiten Sekundärgetriebesonnenrad 37. Auch hier ist bei geschlossener Kupplung 41 also die Abtriebswelle 12 bezüglich des zweiten Sekundärgetriebesonnenrads 37 festgesetzt. Durch gezieltes, wenigstens teilweises Öffnen beziehungsweise Schließen der Kupplungen 40 und 41 kann ein "Torque Vectoring" zwischen der ersten Radachse 2 und der zweiten Radachse 3 erzielt werden. Insbesondere kann Drehmoment von einer der Teilachsen 4 und 5 oder auch von beiden Teilachsen 4 und 5 auf die erste Radachse 2 übertragen werden.

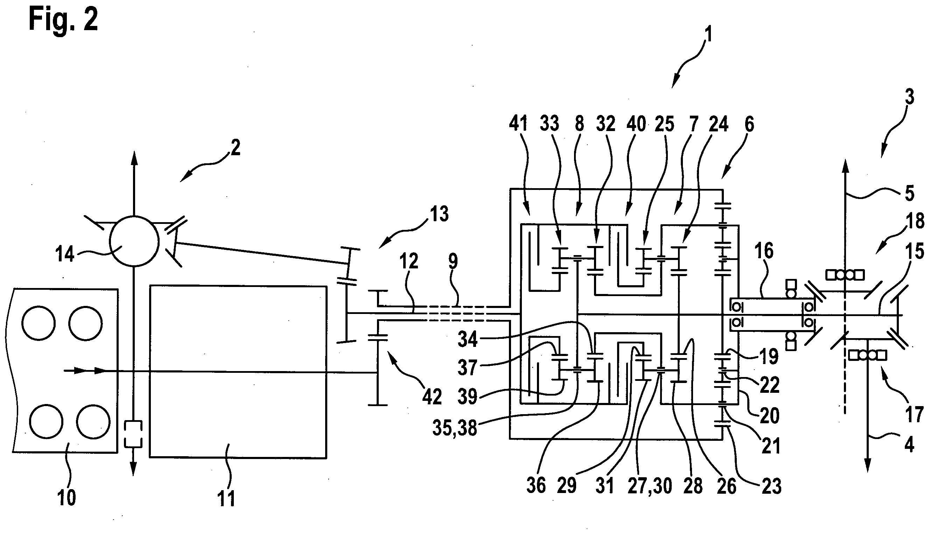

Die Figur 2 zeigt eine zweite Ausführungsform der Getriebeeinrichtung 1. Grundsätzlich wird auf die vorstehenden Ausführungen verwiesen, sodass nachfolgend lediglich auf die Unterschiede eingegangen wird. Der wesentliche Unterschied liegt darin, dass die Drehrichtung der Getriebeeinrichtung umgekehrt ist wie bei der vorstehend beschriebenen ersten Ausführungsform. Aus diesem Grund liegt zwischen der Antriebswelle 9 und dem Antriebsaggregat 10 eine Zahnradstufe 42 vor. Hier ist es nun vorgesehen, dass die zweite Verbindungswelle 16 die erste Verbindungswelle 15 wenigstens bereichsweise umgreift, wobei die Verbindungswellen 15 und 16 koaxial zueinander angeordnet sind. In dem vorstehend beschriebenen ersten Ausführungsbeispiel war es dagegen vorgesehen, dass die erste Verbindungswelle 15 die zweite Verbindungswelle 16 bereichsweise umgreift.

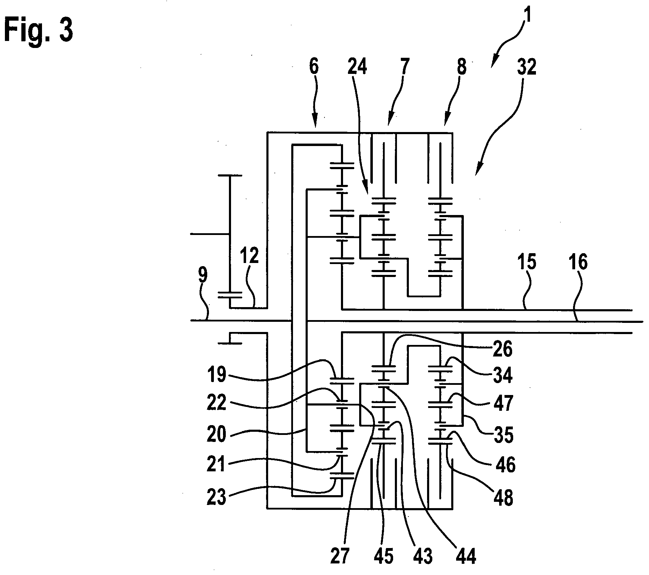

Die Figur 3 zeigt eine Detaildarstellung einer dritten Ausführungsform der Getriebeeinrichtung 1. Auf die vorstehenden Ausführungen wird Bezug genommen. Hier ist es nun vorgesehen, dass das erste Überlagerungsgetriebe 7 lediglich das erste Primärgetriebe 24 und das zweite Überlagerungsgetriebe 8 lediglich das zweite Primärgetriebe 32 aufweist. Jedoch sind anstelle des ersten Primärgetriebesonnenrads 26 ein Außenplanetenrad 43 und ein Innenplanetenrad 44 vorgesehen, welche miteinander kämmen. Das Außenplanetenrad 43 kämmt gleichzeitig mit einem Hohlrad 45, das Innenplanetenrad 44 mit dem ersten Primärgetriebesonnenrad 26.

Das zweite Überlagerungsgetriebe 8 weist das zweite Primärgetriebe 32 auf. An dem zweiten Primärgetriebeplanetenträger 35 sind ebenfalls ein Außenplanetenrad 46 und ein Innenplanetenrad 47 vorgesehen. Das Innenplanetenrad 47 kämmt mit dem zweiten Primärgetriebesonnenrad 36, das Außenplanetenrad 46 mit einem Hohlrad 48. Das Hohlrad 45 ist nun mithilfe der ersten Kupplung 40 bezüglich der Abtriebswelle 12 festsetzbar, das Hohlrad 48 mittels der zweiten Kupplung 41. Mit der hier dargestellten Ausführungsform der Getriebeeinrichtung 1 kann entsprechend dieselbe Funktionalität erzielt werden wie mit den vorstehend beschriebenen Ausführungsformen.

### BEZUGSZEICHENLISTE

- 1: Getriebeeinrichtung
- 2: 1. Radachse
- 3: 2. Radachse
- 4: 1. Teilachse
- 5: 2. Teilachse
- 6: Koppelgetriebe
- 7: 1. Überlagerungsgetriebe
- 8: 2. Überlagerungsgetriebe
- 9: Antriebswelle
- 10: Antriebsaggregat
- 11: Schaltgetriebe
- 12: Abtriebswelle
- 13: Zahnradstufe
- 14: Achsdifferential
- 15: 1. Verbindungswelle
- 16: 2. Verbindungswelle
- 17: 1. Getriebeeinheit
- 18: 2. Getriebeeinheit
- 19: Koppelgetriebesonnenrad
- 20: Koppelgetriebeplanetenträger
- 21: Außenplanetenrad
- 22: Innenplanetenrad
- 23: Koppelgetriebehohlrad
- 24: 1. Primärgetriebe
- 25: 1. Sekundärgetriebe
- 26: 1. Primärgetriebesonnenrad
- 27: 1. Primärgetriebeplanetenträger
- 28: 1. Primärgetriebeplanetenrad
- 29: 1. Sekundärgetriebesonnenrad
- 30: 1. Sekundärgetriebeplanetenträger
- 31: 1. Sekundärgetriebeplanetenrad
- 32: 2. Primärgetriebe
- 33: 2. Sekundärgetriebe
- 34: 2. Primärgetriebesonnenrad
- 35: 2. Primärgetriebeplanetenträger
- 36: 2. Primärgetriebeplanetenrad
- 37: 2. Sekundärgetriebesonnenrad
- 38: 2. Sekundärgetriebeplanetenträger
- 39: 2. Sekundärgetriebeplanetenrad
- 40: 1. Kupplung
- 41: 2. Kupplung
- 42: Zahnradstufe
- 43: Außenplanetenrad
- 44: Innenplanetenrad
- 45: Hohlrad
- 46: Außenplanetenrad
- 47: Innenplanetenrad
- 48: Hohlrad

## Patentansprüche

1. Getriebeeinrichtung (1) für ein Kraftfahrzeug, wobei das Kraftfahrzeug eine erste Radachse (2) und eine zweite Radachse (3) aufweist, wobei die zweite Radachse (2) aus zumindest einer ersten Teilachse (4) und einer zweiten Teilachse (5) besteht, wobei die Getriebeeinrichtung (1) eine mit der ersten Teilachse (4) wirkverbindbare erste Verbindungswelle (15), eine mit der zweiten Teilachse (5) wirkverbindbare zweite Verbindungswelle (16) sowie ein Koppelgetriebe (6) mit einer mit einem Antriebsaggregat (10) des Kraftfahrzeugs wirkverbindbaren Antriebswelle (9) und mit einer mit der ersten Radachse (2) wirkverbindbaren Abtriebswelle (12) aufweist, wobei über das Koppelgetriebe (6) die Antriebswelle (9) mit der ersten und der zweiten Verbindungswelle (15,16) drehmomentaufteilend wirkverbunden ist, **dadurch gekennzeichnet, dass** die erste Verbindungswelle (15) und die zweite Verbindungswelle (16) jeweils direkt an das Koppelgetriebe (6) angeschlossen sind, und dass die Abtriebswelle (12) mittels einer ersten Kupplung (40) schaltbar mit der ersten Verbindungswelle (15) und mittels einer zweiten Kupplung (41) schaltbar mit der zweiten Verbindungswelle (16) wirkverbindbar ist, wobei zwischen der ersten Kupplung (40) und der ersten Verbindungswelle (15) ein erstes Überlagerungsgetriebe (7) und zwischen der zweiten Kupplung (41) und der zweiten Verbindungswelle (16) ein zweites Überlagerungsgetriebe (8) vorgesehen ist, und wobei das erste Überlagerungsgetriebe (7) und das zweite Überlagerungsgetriebe (8) als unmittelbar mit dem Koppelgetriebe (6) wirkverbundene Planetengetriebe ausgebildet sind.

2. Getriebeeinrichtung Anspruch 1, **dadurch gekennzeichnet, dass** die Abtriebswelle (12) über die erste Kupplung (40) mit dem ersten Überlagerungsgetriebe (7) und über die zweite Kupplung (41) mit dem zweiten Überlagerungsgetriebe (8) wirkverbindbar ist.

3. Getriebeeinrichtung nach einem der vorhergehenden Ansprüche, **dadurch gekennzeichnet, dass** das Koppelgetriebe (6) ein Koppelgetriebesonnenrad (19), ein Koppelgetriebehohlrad (23) und einen Koppelgetriebeplanetenträger (20) mit wenigstens einem mit dem Koppelgetriebesonnenrad (19) und dem Koppelgetriebehohlrad (23) kämmenden Koppelgetriebeplanetenrad (21) aufweist, wobei das Koppelgetriebehohlrad (23) mit der Antriebswelle (9) unmittelbar wirkverbunden ist.

4. Getriebeeinrichtung nach Anspruch 3, **dadurch gekennzeichnet, dass** der Koppelgetriebeplanetenträger (20) mit der ersten Verbindungswelle (15) und das Koppelgetriebesonnenrad (19) mit der zweiten Verbindungswelle (16) unmittelbar wirkverbunden ist, oder dass der Koppelgetriebeplanetenträger (20) mit der zweiten Verbindungswelle (16) und das Koppelgetriebesonnenrad (19) mit der ersten Verbindungswelle (15) unmittelbar wirkverbunden ist.

5. Getriebeeinrichtung nach Anspruch 3 oder 4, **dadurch gekennzeichnet, dass** der Koppelgetriebeplanetenträger (20) zumindest ein Außenplanetenrad (21) und zumindest ein Innenplanetenrad (22) aufweist, die miteinander kämmen, wobei das Außenplanetenrad (21) mit dem Koppelgetriebehohlrad (23) und das Innenplanetenrad (22) mit dem Koppelgetriebesonnenrad (19) kämmt.

6. Getriebeeinrichtung nach einem der Ansprüche 3 bis 5, **dadurch gekennzeichnet, dass** das erste Überlagerungsgetriebe (7) ein erstes Primärgetriebe (24) und ein erstes Sekundärgetriebe (25) aufweist, wobei das erste Primärgetriebe (24) ein erstes Primärgetriebesonnenrad (26) und einen ersten Primärgetriebeplanetenträger (27) mit wenigstens einem mit dem ersten Primärgetriebesonnenrad (26) kämmenden ersten Primärgetriebeplanetenrad (28) aufweist, wobei das erste Primärgetriebesonnenrad (26) mit der ersten Verbindungswelle (15) unmittelbar wirkverbunden ist und der erste Primärgetriebeplanetenträger (27) mit dem Koppelgetriebeplanetenträger (20) unmittelbar wirkverbunden ist.

7. Getriebeeinrichtung nach Anspruch 6, **dadurch gekennzeichnet, dass** das erste Sekundärgetriebe (25) ein erstes Sekundärgetriebesonnenrad (29) und einen ersten Sekundärgetriebeplanetenträger (27) mit wenigstens einem mit dem ersten Sekundärgetriebesonnenrad (29) kämmenden ersten Sekundärgetriebeplanetenrad (31) aufweist, wobei das erste Sekundärgetriebesonnenrad (29) mittels der ersten Kupplung (40) bezüglich der Abtriebswelle (12) zumindest teilweise, insbesondere vollständig, festsetzbar ist und der erste Sekundärgetriebeplanetenträger (30) mit dem Koppelgetriebeplanetenträger (20) unmittelbar wirkverbunden ist.

8. Getriebeeinrichtung nach einem der Ansprüche 3 bis 7, **dadurch gekennzeichnet, dass** das zweite Überlagerungsgetriebe (8) ein zweites Primärgetriebe (32) und ein zweites Sekundärgetriebe (33) aufweist, wobei das zweite Primärgetriebe (32) ein zweites Primärgetriebesonnenrad (34) und einen zweiten Primärgetriebeplanetenträger (35) mit wenigstens einem mit dem zweiten Primärgetriebesonnenrad (34) kämmenden zweiten Primärgetriebeplanetenrad (36) aufweist, wobei das zweite Primärgetriebesonnenrad (34) mit dem Koppelgetriebeplanetenträger (20) unmittelbar wirkverbunden ist und der zweite Primärgetriebeplanetenträger (35) mit der ersten Verbindungswelle (15) unmittelbar wirkverbunden ist.

9. Getriebeeinrichtung nach Anspruch 8; **dadurch gekennzeichnet, dass** das zweite Sekundärgetriebe (33) ein zweites Sekundärgetriebesonnenrad (37) und einen zweiten Sekundärgetriebeplanetenträger (38) mit wenigstens einem mit dem zweiten Sekundärgetriebesonnenrad (37) kämmenden zweiten Sekundärgetriebeplanetenrad (39) aufweist, wobei das zweite Sekundärgetriebesonnenrad (37) mittels der zweiten Kupplung (41) bezüglich der Abtriebswelle (12) zumindest teilweise, insbesondere vollständig, festsetzbar ist, und der zweite Sekundärgetriebeplanetenträger (38) mit dem zweiten Primärgetriebeplanetenträger (35) unmittelbar wirkverbunden ist.

## Claims

1. Gearbox unit (1) for a motor vehicle, wherein the motor vehicle has a first wheeled axle (2) and a second wheeled axle (3), wherein the second wheeled axle (2) includes at least one first sub-axle (4) and one second sub-axle (5), wherein the gearbox unit (1) has first connecting shaft (15) that can be operatively connected to the first sub-axle (4), a second connecting shaft (16) that can be operatively connected to the second sub-axle (5) as well as a coupling gearbox (6) with a drive input shaft (9) that can be operatively connected to a drive assembly (10) of the motor vehicle and with a drive output shaft (12) that can be operatively connected to the first wheeled axle (2), wherein by means of the coupling gearbox (6) the input drive shaft (9) is operatively connected in a torque-splitting fashion to the first and second connecting shafts (15, 16), **characterised in that** the first connecting shaft (15) and the second connecting shaft (16) are respectively directly connected to the coupling gearbox (6), and that the drive output shaft (12) can be operatively connected to the first connecting shaft (15) in a switchable manner by means of a first clutch (40) and can be operatively connected to the second connecting shaft (16) in a switchable manner by means of a second clutch (41), wherein a first superposition gearbox (7) is provided between the first clutch (40) and the first connecting shaft (15) and a second superposition gearbox (8) is provided between the second clutch (41) and the second connecting shaft (16), and wherein the first superposition gearbox (7) and the second superposition gearbox (8) are formed as planetary gears that can be directly operatively connected to the coupling gearbox (6).

2. Gearbox unit claim 1, **characterised in that** the drive output shaft (12) can be operatively connected to the first superposition gearbox (7) by means of the first clutch (40) and can be operatively connected to the second superposition gearbox (8) by means of the second clutch (41).

3. Gearbox unit according to any one of the preceding claims, **characterised in that** the coupling gearbox (6) has a coupling gear sun wheel (19), a coupling gear ring wheel (23) and a coupling gear planetary carrier (20) with at least one coupling gear planetary wheel (21) meshing with the coupling gear sun wheel (19) and the coupling gear ring wheel (23), wherein the coupling gear ring wheel (23) is directly operatively connected to the input drive shaft (9).

4. Gearbox unit according to claim 3, **characterised in that** the coupling gear planetary carrier (20) is directly operatively connected to the first connecting shaft (15) and the coupling gear sun wheel (19) is directly operatively connected to the second connecting shaft (16), or that the coupling gear planetary carrier (20) is directly operatively connected to the second connecting shaft (16) and the coupling gear sun wheel (19) is directly operatively connected to the first connecting shaft (15).

5. Gearbox unit according to claim 3 or 4, **characterised in that** the coupling gear planetary carrier (20) has at least one outer planetary wheel (21) and at least one inner planetary wheel (22) which mesh with each other, wherein the outer planetary wheel (21) meshes with the coupling gear ring wheel (23) and the inner planetary wheel (22) meshes with the coupling gear sun wheel (19).

6. Gearbox unit according to any one of claims 3 to 5, **characterised in that** the first superposition gearbox (7) has a first primary gear (24) and a first secondary gear (25), wherein the first primary gear (24) has a first primary gear sun wheel (26) and a first primary gear planetary carrier (27) with at least one first primary gear planetary wheel (28) that meshes with the first primary gear sun wheel (26), wherein the first primary gear sun wheel (26) is directly operatively connected to the first connecting shaft (15) and the first primary gear planetary carrier (27) is directly operatively connected to the coupling gear planetary carrier (20).

7. Gearbox unit according to claim 6, **characterised in that** the first secondary gear (25) has a first secondary gear sun wheel (29) and a first secondary gear planetary carrier (27) with at least one first secondary planetary wheel (31) that meshes with the first secondary gear sun wheel (29), wherein the first secondary gear sun wheel (29) can be at least partially, preferably completely, fixed by means of the first clutch (40) in relation to the drive output shaft (12) and the first secondary gear planetary carrier (30) is directly operatively connected to the coupling drive planetary carrier (20).

8. Gearbox unit according to any one of claims 3 to 7, **characterised in that** the second superposition gear (8) has a second primary gear (32) and a second secondary gear (33), wherein the second primary gear (32) has a second primary gear sun wheel (34) and a second primary gear planetary carrier (35) with at least one second primary gear planetary wheel (36) that meshes with the second primary gear sun wheel (34), wherein the second primary gear sun wheel (34) is directly operatively connected to the coupling gear planetary carrier (20) and the second primary gear planetary carrier (35) is directly operatively connected to the first connecting shaft (15).

9. Gearbox unit according to claim 8, **characterised in that** the second secondary gear (33) has a second secondary gear sun wheel (37) and a second secondary gear planetary carrier (38) with at least one second secondary gear planetary wheel (39) that meshes with the second secondary gear sun wheel (37), wherein the second secondary gear sun wheel (37) is at least partially, preferably completely, fixed by means of the second clutch (41) in relation to the drive output shaft (12), and the second secondary gear planetary carrier (38) is directly operatively connected to the second primary gear planetary carrier (35).

## Revendications

1. Dispositif de transmission (1) pour un véhicule automobile,
dans lequel le véhicule automobile comporte un premier essieu (2) et un deuxième essieu (3),
dans lequel le deuxième essieu (2) est constitué d'au moins un premier essieu partiel (4) et d'un deuxième essieu partiel (5),
dans lequel le dispositif de transmission (1) comporte un premier arbre de liaison (15) pouvant être mis en liaison active avec le premier essieu partiel (4), un deuxième arbre de liaison (16) pouvant être mis en liaison active avec le deuxième essieu partiel (5) ainsi qu'un mécanisme de couplage (6) avec un arbre d'entraînement (9) pouvant être mis en liaison active avec un groupe de propulsion (10) du véhicule automobile et avec un arbre de sortie (12) pouvant être mis en liaison active avec le premier essieu (2),
dans lequel, par l'intermédiaire du mécanisme de couplage (6), l'arbre d'entraînement (9) est en liaison active avec le premier et le deuxième arbre de liaison (15, 16) de manière à diviser le couple,
**caractérisé en ce que** le premier arbre de liaison (15) et le deuxième arbre de liaison (16) sont raccordés à chaque fois directement au mécanisme de couplage (6) et **en ce que** l'arbre de sortie (12) peut être mis en liaison active soit, commuté au moyen d'un premier couplage (40), avec le premier arbre de liaison (15) soit, commuté au moyen d'un deuxième couplage (41), avec le deuxième arbre de liaison (16),
dans lequel un premier mécanisme de superposition (7) est prévu entre le premier couplage (40) et le premier arbre de liaison (15) et un deuxième mécanisme de superposition (8) est prévu entre le deuxième couplage (41) et le deuxième arbre de liaison (16)
et dans lequel le premier mécanisme de superposition (7) et le deuxième mécanisme de superposition (8) sont conçus comme des engrenages planétaires en liaison active directe avec le mécanisme de couplage (6).

2. Dispositif de transmission la revendication 1, **caractérisé en ce que** l'arbre de sortie (12) peut être mis en liaison active par l'intermédiaire du premier couplage (40) avec le premier mécanisme de superposition (7) et par l'intermédiaire du deuxième couplage (41) avec le deuxième mécanisme de superposition (8).

3. Dispositif de transmission selon l'une quelconque des revendications précédentes, **caractérisé en ce que** le mécanisme de couplage (6) comporte une roue solaire de mécanisme de couplage (19), une roue à denture intérieure de mécanisme de couplage (23) et une cage de transmission planétaire de mécanisme de couplage (20) avec au moins une roue satellite de mécanisme de couplage (21) s'engrenant avec la roue solaire de mécanisme de couplage (19) et avec la roue à denture intérieure de mécanisme de couplage (23), laquelle roue à denture intérieure de mécanisme de couplage (23) est en liaison active directe avec l'arbre d'entraînement (9).

4. Dispositif de transmission selon la revendication 3, **caractérisé en ce que** la cage de transmission planétaire de mécanisme de couplage (20) est en liaison active directe avec le premier arbre de liaison (15) et la roue solaire de mécanisme de couplage (19) est en liaison active directe avec le deuxième arbre de liaison (16), ou **en ce que** la cage de transmission planétaire de mécanisme de couplage (20) est en liaison active directe avec le deuxième arbre de liaison (16) et la roue solaire de mécanisme de couplage (19) est en liaison active directe avec le premier arbre de liaison (15).

5. Dispositif de transmission selon la revendication 3 ou 4, **caractérisé en ce que** la cage de transmission planétaire de mécanisme de couplage (20) comporte au moins une roue satellite extérieure (21) et au moins une roue satellite intérieure (22) qui s'engrènent ensemble, laquelle roue satellite extérieure (21) s'engrène avec la roue à denture intérieure de mécanisme de couplage (23) et laquelle roue satellite intérieure (22) s'engrène avec la roue solaire de mécanisme de couplage (19).

6. Dispositif de transmission selon l'une quelconque des revendications 3 à 5, **caractérisé en ce que** le premier mécanisme de superposition (7) comporte un premier mécanisme primaire (24) et un premier mécanisme secondaire (25), lequel premier mécanisme primaire (24) comporte une première roue solaire de mécanisme primaire (26) et une première cage de transmission planétaire de mécanisme primaire (27) avec au moins une première roue satellite de mécanisme primaire (28) s'engrenant avec la première roue solaire de mécanisme primaire (26), laquelle première roue solaire de mécanisme primaire (26) est en liaison active directe avec le premier arbre de liaison (15) et laquelle première cage de transmission planétaire de mécanisme primaire (27) est en liaison active directe avec la cage de transmission planétaire de mécanisme de couplage (20).

7. Dispositif de transmission selon la revendication 6, **caractérisé en ce que** le premier mécanisme secondaire (25) comporte une première roue solaire de mécanisme secondaire (29) et une première cage de transmission planétaire de mécanisme secondaire (27) avec au moins une première roue satellite de mécanisme secondaire (31) s'engrenant avec la première roue solaire de mécanisme secondaire (29), laquelle première roue solaire de mécanisme secondaire (29) peut être immobilisée par rapport à l'arbre de sortie (12) au moins partiellement et en particulier complètement au moyen du premier couplage (40) et laquelle première cage de transmission planétaire de mécanisme secondaire (30) peut être en liaison active directe avec la cage de transmission planétaire de mécanisme de couplage (20).

8. Dispositif de transmission selon l'une quelconque des revendications 3 à 7, **caractérisé en ce que** le deuxième mécanisme de superposition (8) comporte un deuxième mécanisme primaire (32) et un deuxième mécanisme secondaire (33), lequel deuxième mécanisme primaire (32) comporte une deuxième roue solaire de mécanisme primaire (34) et une deuxième cage de transmission planétaire de mécanisme primaire (35) avec au moins une deuxième roue satellite de mécanisme primaire (36) s'engrenant avec la deuxième roue solaire de mécanisme primaire (34), laquelle deuxième roue solaire de mécanisme primaire (34) est en liaison active directe avec la cage de transmission planétaire de mécanisme de couplage (20) et laquelle deuxième cage de transmission planétaire de mécanisme primaire (35) est en liaison active directe avec le premier arbre de liaison (15).

9. Dispositif de transmission selon la revendication 8, **caractérisé en ce que** le deuxième mécanisme secondaire (33) comporte une deuxième roue solaire de mécanisme secondaire (37) et une deuxième cage de transmission planétaire de mécanisme secondaire (38) avec au moins une deuxième roue satellite de mécanisme secondaire (39) s'engrenant avec la deuxième roue solaire de mécanisme secondaire (37), laquelle deuxième roue solaire de mécanisme secondaire (37) peut être immobilisée par rapport à l'arbre de sortie (12) au moins partiellement et en particulier complètement au moyen du deuxième couplage (41) et laquelle deuxième cage de transmission planétaire de mécanisme secondaire (38) peut être en liaison active directe avec la deuxième cage de transmission planétaire de mécanisme primaire (35).
